# EUROPEAN PATENT APPLICATION

(11) **EP 3 812 183 A2**
(43) Date of publication of application: **28.04.2021**
(21) Application number: 19756211.9
(22) Date of filing: 20.06.2019
(51) Int. Cl.: B60G 7/00, F16C 11/06, F16F 1/38

(54) **SUSPENSION COMPONENT OF AN AUTOMOTIVE VEHICLE**

(30) Priority: 22.06.2018 EP 18382465
(71) Applicant: Fagor Ederlan, S. Coop., 20500 Arrasate - Mondragon Guipuzcoa (ES); Cikautxo, S. Coop., 48710 Berriatua (Vizcaya) (ES)
(72) Inventor: LABRADOR VAREA, Ricardo, 48200 DURANGO (ES); AZPIAZU ECHAVE, Iñaki, 48270 MARKINA - XEMEIN (ES); EGUIDAZU UNAMUNO, Nerea, 48230 ELORRIO (ES)
(74) Representative: Igartua, Ismael
(86) International application number: PCT/ES2019/070428
(87) International publication number: WO 2019/243649

(57) **Abstract**

Suspension component of an automotive vehicle, comprising at least one hole (10) and an interconnector (120) housed in said hole (10), the suspension component (100) comprising, in the hole (10), a joining element (30, 20) in which the interconnector (120) is coupled. The joining element (30, 20) comprises an elastomer element (30) and said joining element (30, 20) is integrated in the hole (10) by means of the chemical bonding of the elastomer element (30) with the suspension component (100) by means of a vulcanization process. The elastomer element (30) of the joining element (30, 20) integrated in the hole (10) is a part that is molded and cured by means of said vulcanization process inside the hole (10) starting with a non-molded and non-cured raw material.

## Description

### TECHNICAL FIELD

The present invention relates to suspension components of an automotive vehicle.

### PRIOR ART

An automotive vehicle has a suspension system which provides the leveling of said vehicle and controls the degree of inclination and roll as it travels over different types of roads, controlling and dampening tensile loads in the different suspension components of the suspension system. These suspension components include, among others, suspension arms and knuckles, with different configurations according to the suspension system used. In the suspension systems of the prior art, the types of interconnectors existing for the suspension components are bushings and ball or ball joint interconnectors.

The bushings of the prior art comprise an inner sleeve, an outer sleeve, and an elastomer element between both sleeves. The elastomer element, usually a rubber element, is vulcanized and cured inside the inner and outer sleeves, the outer diameter of the bushing is then calibrated, with the elastomer acquiring a specific tensile load, and it is subjected to an elastomer adhesion control. The bushing is coupled to a hole of the suspension component by means of press-fitting in a pressing installation, the outer diameter of the bushing interfering with the inner diameter of the hole of the suspension component.

US2009295113A1 discloses a suspension component, more specifically a suspension arm, comprising a hole in which a bushing is press-fitted.

DE102012200251A1 discloses a suspension component, particularly a handlebar, comprising a hole with a joining element comprising an elastomer element. The joining element is integrated in the hole by means of the chemical bonding of the elastomer element with the suspension component by means of a vulcanization process. The elastomer element is introduced into the hole in the form of a molded part.

### DISCLOSURE OF THE INVENTION

The object of the invention is to provide a suspension component of an automotive vehicle and an associated method, as defined in the claims.

A first aspect of the invention relates to a suspension component of an automotive vehicle, comprising at least one hole and an interconnector housed in said hole. The suspension component comprises, in the hole, a joining element in which the interconnector is coupled. The joining element comprises an elastomer element and said joining element is integrated in the hole by means of the chemical bonding of the elastomer element with the suspension component by means of a vulcanization process. The elastomer element of the joining element integrated in the hole is a part that is molded and cured by means of said vulcanization process inside the hole starting with a non-molded and non-cured raw material.

A second aspect of the invention relates to a method of integrating a joining element in a hole of a suspension component of an automotive vehicle in which an interconnector is housed, wherein the joining element comprises an elastomer element, and said joining element is integrated in the hole by means of the chemical bonding of the elastomer element with the suspension component, with the interconnector being coupled in the joining element. The method of the invention comprises the following steps:
- a first step of introducing the joining element into the hole with the elastomer element in the form of non-molded and non-cured raw material, and
- a second step of molding, curing, and integration in which the elastomer element is molded, cured, and integrated in the hole by vulcanization.

In the suspension components of the prior art, the bushings comprise an inner sleeve, an outer sleeve and an intermediate elastomer element. To perform the coupling of the bushing in the suspension component, the bushing must be manufactured, prior to said coupling, with a method which includes vulcanizing and curing the intermediate elastomer element inside the inner and outer sleeves, calibrating the outer diameter of the bushing to provide the elastomer element with a specific tensile load, and finally controlling the adhesion of the elastomer element to the inner and outer sleeves. The bushing is then coupled to a hole of the suspension component by means of press-fitting, the outer diameter of the bushing interfering with the inner diameter of the hole of the suspension component, and the force required for extracting the bushing from the suspension component is controlled.

Suspension components with bushings in which the outer sleeve is dispensed with are known. Suspension components are known to be manufactured by introducing the inner sleeve with the elastomer element already molded into the hole of the suspension component, and integrating the elastomer element in the hole by means of the chemical bonding of the elastomer element with the suspension component by means of a vulcanization process.

In addition to being advantageous as an alternative to suspension components having conventional bushings, because the elastomer element of the joining element replaces the elastomer element that conventional bushings usually have, therefore dispensing with the outer sleeve, the suspension component of the invention has other additional advantages.

On one hand, as the elastomer element is introduced into the hole in the form of non-molded raw material and is integrated and molded inside the hole, there is a lower number of manufacturing steps by dispensing with a prior step of molding the elastomer element.

On the other hand, the fact that the elastomer element is molded once it is already inside the hole allows greater freedom in the geometry design of the hole of the suspension component, since the elastomer element adapts to said geometry in the step of molding, curing, and integration. This allows it to be adapted to the different requirements of the different suspension components in the suspension systems. Thus, holes with a wall with a concave curved inner area, for example, can be used. Furthermore, the adaptation of the elastomer element to the different allowable geometries of the wall of the hole of the suspension component allows said elastomer element to be better and more evenly distributed, which allows said elastomer element to last longer, having a better fatigue performance.

Another advantage of the suspension component of the invention is that it also allows coupling ball or ball joint interconnectors. In the case of ball or ball joint interconnectors, acoustic isolation and vibration isolation are improved.

These and other advantages and features of the invention will become evident in view of the drawings and detailed description of the invention.

### DESCRIPTION OF THE DRAWINGS

Figure 1 shows a perspective view of a suspension component and a bushing and a ball interconnector coupled to the suspension component of the prior art.
Figure 2 shows a section view of the bushing coupled to the suspension component of Figure 1.
Figure 3 shows a section view of the ball interconnector coupled to the suspension component of Figure 1.
Figure 4 shows a perspective view of an embodiment of the suspension component according to the invention.
Figure 5 shows a section view of an extension of the suspension component arranged in an open mold.
Figure 6 shows a section view of a joining element arranged inside a hole of the extension of the suspension component which is arranged in the open mold.
Figure 7 shows a section view of the joining element of Figure 6 arranged inside the hole of the extension of the suspension component with the mold closed.
Figure 8 shows a partial section view of the joining element of Figure 6, removed from the mold and arranged such that it is coupled inside the hole of the extension of the suspension component.
Figure 9 shows a section view of the joining sleeve of the joining element of the suspension component of Figure 4.
Figure 10 shows a section view of the elastomer element of the joining element of the suspension component of Figure 4.
Figure 11 shows a section view of the sleeve of an interconnector of the suspension component of Figure 4.
Figure 12 shows a partial perspective view of the joining element arranged inside the hole of the extension of the suspension component, and the sleeve of the interconnector arranged for being introduced inside the joining element with a force F for compressing the elastomer element.
Figure 13 shows a partial section view of the assembly formed by the interconnector arranged such that it is coupled inside the hole of the extension of the suspension component by means of the joining element.
Figure 14 shows a partial section view of a second embodiment of the invention with a ball joint interconnector.
Figure 15 shows a partial section view of a third embodiment of the invention with a ball interconnector.

### DETAILED DISCLOSURE OF THE INVENTION

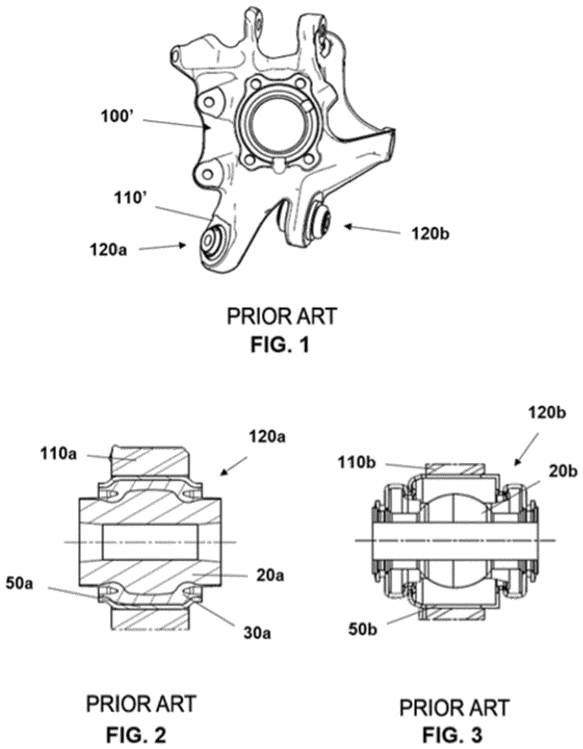

Figure 1 shows a perspective view of a suspension component 100' of the prior art which, in this example, is a knuckle, and a bushing 120a and a ball interconnector 120b coupled to the suspension component 100'. Figure 2 shows a section view of the bushing 120a coupled to the suspension component 100' of Figure 1, comprising an inner sleeve 20a, an outer sleeve 50a, and an elastomer element 30a arranged between both which is vulcanized, cured, and compressed to impart a specific tension thereto. Figure 3 shows a section view of the ball interconnector 120b coupled to the suspension component 100' of Figure 1, comprising an inner sleeve 20b, an outer sleeve 50b, and a ball arranged between both.

The bushing 120a and the ball interconnector 120b of the prior art are coupled to the suspension component 100' once they are manufactured beforehand. In said bushing 120a and said ball interconnector 120b, the outer diameter of the respective outer sleeve 50a, 50b is calibrated, reducing said outer diameter by means of pressure, so as to be able to couple them to a corresponding hole of a respective extension 110a, 110b of the suspension component 100' by means of press-fitting.

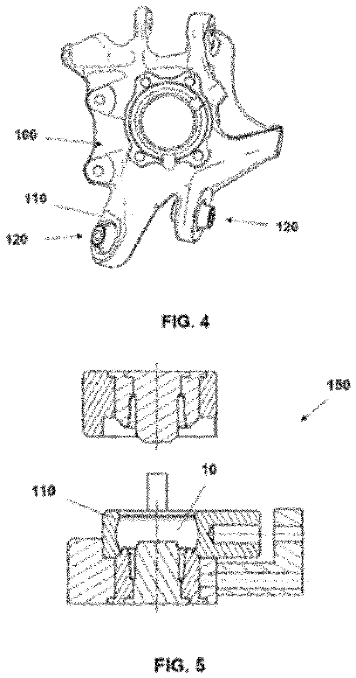

Figure 4 shows a perspective view of an embodiment of the suspension component 100 of the invention which, in this embodiment, is a knuckle, incorporating two interconnectors 120. The suspension component 100 of the invention comprises at least one hole 10 configured for housing an interconnector 120, and comprises, in each hole 10, a joining element comprising an elastomer element 30, the joining element being integrated in the hole 10 by means of the chemical bonding of the elastomer element 30 with the suspension component 100 by means of a vulcanization process. The interconnector 120 is coupled in said joining element. The elastomer element 30 of the joining element integrated in the hole 10 is a part that is molded and cured *in situ* by means of said vulcanization process inside the hole 10 starting with a non-molded raw material.

With the suspension component of the invention, the interconnectors of the prior art, i.e., the bushings, the ball interconnectors, and the ball joint interconnectors which are coupled by press-fitting, can be replaced with interconnectors which are coupled to the corresponding hole 10 by means of the joining element. Joinings between the suspension components and the interconnectors can thereby be made uniform.

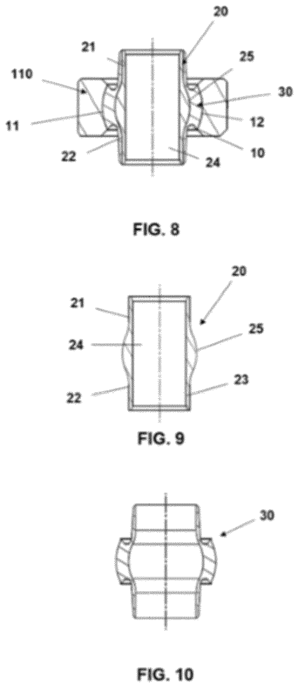

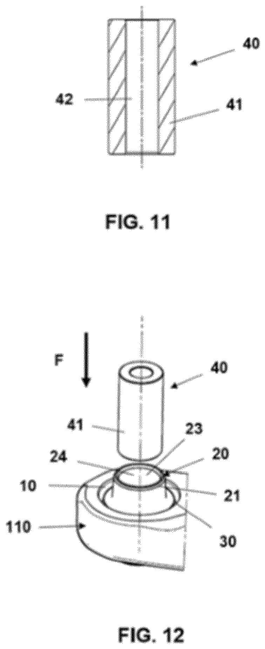

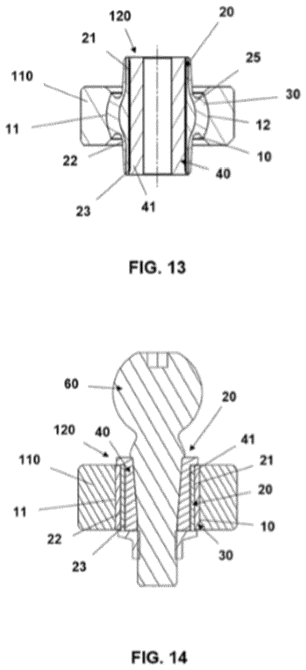

The interconnectors 120 of Figure 4 replace the bushings of the prior art. Figure 13 shows one of these interconnectors 120. In this embodiment, the joining element comprises a joining sleeve 20, shown in Figure 9, with the elastomer element 30, shown in Figure 10, being arranged around said joining sleeve 20. Although the elastomer element 30 is depicted in Figure 10 already molded therein as a separate part, in practice it will never be configured as a separate part in the suspension component 100 of the invention, since it will be molded once it is introduced into the hole 10 and therefore acquire the shape imposed by the hole 10 itself, the joining sleeve 20, and the mold that is used. The elastomer element 30 is bonded with the joining sleeve 20 by means of a chemical bond, and the interconnector 120, which comprises a sleeve 40, shown in Figure 11, in this embodiment, is coupled to said joining sleeve 20. The joining sleeve 20 is preferably manufactured in steel, and it can also be manufactured in aluminum or combination of aluminum with injected thermoplastic.

As explained, the molding and curing of the elastomer element 30 and its chemical bonding with the suspension component 100 is performed by means of a vulcanization process carried out on the non-molded raw material of the elastomer element 30 in the hole 10. In a preferred embodiment, the elastomer element 30 is vulcanized rubber, for which purpose and beforehand, non-molded raw rubber, for example in strips, has been arranged in the hole 10 of the suspension component 100, as the raw material of the vulcanized rubber, the strips of raw rubber being arranged around the joining sleeve 20. The raw rubber comprises natural rubber and corresponding additives known in the prior art, such as carbon black, accelerant as a reagent which can be sulfur, oil, and mineral fillers, which allow curing raw rubber by means of the vulcanization process.

The suspension component 100, which is a knuckle in the example of Figure 4, is preferably manufactured in cast or forged iron or aluminum, but in the case of other suspension components, such as suspension arms, for example, it can be manufactured with pressed steel sheet. The holes 10 of this suspension component 100 will be formed in the corresponding extensions 110 by means of machining.

The joining sleeve 20 of the joining element is radially expanded following the chemical bonding of the elastomer element 30 with the suspension component 100. In a preferred embodiment, this radial expansion occurs by means of introducing the sleeve 40 of the interconnector 120 into the sleeve 20 following the chemical bonding of the elastomer element 30 with the suspension component 100, the outer diameter of the sleeve 40 of the interconnector 120 being larger than the inner diameter of the joining sleeve 20.

In the suspension component 100, the surface of the wall 11 of the hole 10 of the extension 110 of the suspension component 100 is, in an embodiment of the invention, uneven, i.e., not a smooth surface, to favor the adhesion of the elastomer element 30. The outer surface 22 of the wall 21 of the joining sleeve 20 which is in contact with the elastomer element 30 can also be uneven. One way to obtain said uneven surfaces is to generate on the surface of the wall 11 and the outer surface 22 a plurality of grooves running along same, not shown in the drawings, so that the material of the elastomer element 30 penetrates said grooves during chemical bonding by vulcanization.

The joining element of the suspension component 100 allows designing the geometry of the hole 10 of the suspension component 100 with greater freedom, and thereby adapting to the different requirements of the suspension components of a suspension system. In this sense, instead of being straight like in the prior art, the wall 11 of the hole 10 of the suspension component 100 can comprise a curved inner area 12, for example. In the embodiment of the extension 110 shown in Figure 5, this curved inner area 12 is centered on the axis of symmetry of the wall 11 and runs along the perimeter of said wall 11 of the hole 10. This curved inner area 12 can have eccentricities and can furthermore not run along the entire perimeter of the wall 11, but rather run along it only partially or in certain areas.

Therefore, in one embodiment the curved inner area 12 of the wall 11 of the hole 10 is concave, as shown in Figure 5. In the suspension component 100 shown in Figure 4, the wall 21 of the joining sleeve 20 comprises a curved outer area 25 which is convex, the curved outer area 25 being complementary to the curved inner area 12 of the wall 11 of the hole 10 in this embodiment of the suspension component 100, as shown in Figures 8 and 12. This geometry of the curved outer area 25 and the curved inner area 12 allows the non-molded and non-cured raw material of the elastomer element 30 to be better, more evenly, and uniformly distributed during the vulcanization process, which allows said elastomer element 30 to last longer.

In another embodiment of the suspension component 100 of the invention, the curved inner area 12 of the wall 11 of the hole 10 is convex. In this embodiment or in an embodiment in which the wall 11 of the hole 10 is straight, or even in an embodiment in which the curved inner area 12 of the wall 11 is concave, the wall 21 of the sleeve 20 being straight also constitutes a good option, with the sleeve 20 usually having a substantially cylindrical geometry in this case.

In the method of the invention, as explained above, the joining element is integrated in the hole 10 by means of the chemical bonding of the elastomer element 30 with the suspension component 100, by vulcanization, once the joining element is introduced into the hole 10 of the suspension component 100. The method of the invention comprises the following steps:
- a first step of introducing the joining element into the hole 10 with the elastomer element 30 in the form of non-molded and non-cured raw material, and
- a second step of molding, curing, and integration in which the elastomer element 30 is molded, cured, and integrated in the hole 10 by vulcanization.

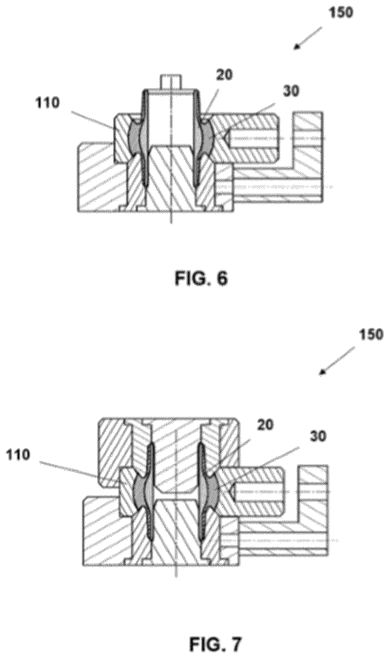

In the method of the invention, the joining element is arranged in the hole 10 held by means of a mold 150 pressing the elastomer element 30 into its interior for vulcanization. As shown in Figures 5 to 7, preferably a mold 150 with two semi-molds which will have the corresponding placements to support the different parts used, the semi-molds of the mold 150 confining said parts, as shown in Figure 7, is used.

The method comprises in this embodiment a step of arranging the extension 110 of the suspension component 100, in which the joining element will be coupled, in one of the semi-molds of the mold 150 as shown in Figure 5. The mold 150 is open, and the corresponding hole 10 is arranged on a support placement for each of the extensions 110. In one embodiment, the method of the invention then comprises the following steps: a step of introducing the joining element into the hole 10 of the suspension component 100, the elastomer element 30 of the joining element being in the form of non-molded and non-cured raw material before being introduced; a step of heating the non-cured raw material of the elastomer element 30, that is, in a preferred embodiment raw rubber, the raw material being confined and subjected to pressure upon closing the semi-molds of the mold 150; a step of curing and chemical bonding of the raw material which has been converted, by vulcanization in this example, into vulcanized rubber and molded with the shape demarcated by the hole 10, the joining sleeve 20, and the mold 150. This vulcanized rubber is the elastomer element 30 that chemically bonds with the suspension component 100 inside the hole 10, once a curing time of the elastomer element 30 in which it is subjected to pressure and temperature has lapsed, acquiring an elastic characteristic that raw rubber as the non-molded and non-cured raw material does not have.

In another alternative of the method, the mold 150 is heated before introducing the joining element into the hole 10 of the suspension component, for example, by means of magnetic induction. With these method alternatives, the total time for the vulcanization process and chemical bonding of the elastomer element 30 with the suspension component 100 is reduced.

The step of curing and chemical bonding of the elastomer element 30 takes place by leaving it in the closed mold 150 over a course of time, after which time the raw rubber, as the non-molded and non-cured raw material of the elastomer element 30 will experience a change in viscosity, flowing into the space of the hole 10 and filling it up. The vulcanization process occurs by maintaining the pressure and temperature, the elastomer element 30 adhering to the inner wall 11 of the hole 10 of the extension 110 of the suspension component 100, and to an outer surface 22 of a wall 21 of the joining sleeve 20, as shown in Figure 8.

One embodiment of the method of the invention includes a step after performing the chemical bonding of the elastomer element 30 with the suspension component 100 and with the joining sleeve 20, in which said joining sleeve 20 is radially expanded. In a preferred embodiment, the interconnector 120 comprises a sleeve 40 with an outer diameter larger than the original inner diameter of the joining sleeve 20, the radial expansion of the joining sleeve 20 occurring by means of introducing the sleeve 40 of the interconnector 120 into the joining sleeve 20, as illustrated in Figure 12. The expansion of the joining sleeve 20 thereby occurring when the sleeve 40 dimensionally interferes with the joining sleeve 20, a coupling of the outer surface of the wall 41 of the sleeve 40 with the inner surface 23 of the wall 21 of the joining sleeve 20 occurring. To that end, the sleeve 40 is longitudinally aligned with the joining sleeve 20, and sufficient force F is applied by means of a bolt, for example, so that it is introduced into the joining sleeve 20. In this embodiment, the sleeve 40 is made of aluminum and comprises wall 41, which is thicker than wall 21 of the sleeve 20 which is made of steel.

Figure 14 shows an interconnector 120 corresponding to a second embodiment of the suspension component 100 of the invention. This interconnector 120 is a ball joint interconnector. In this embodiment, the interconnector 120 comprises a sleeve 40 with a longitudinal conical hole and a ball joint 60 which is coupled in said sleeve 40. The sleeve 40 radially expands the joining sleeve 20 when it is introduced into said joining sleeve 20.

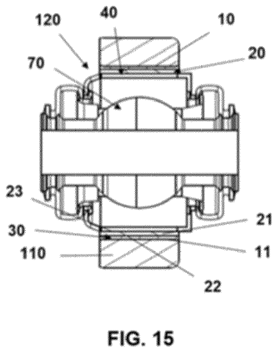

Figure 15 shows an interconnector 120 corresponding to a third embodiment of the suspension component 100 of the invention. This interconnector 120 is a ball interconnector. As shown in this drawing, the interconnector 120 comprises a ball bond with a ball sleeve 70. Said interconnector 120 comprises a sleeve 40 in which the ball sleeve 70 is arranged, said sleeve 40 being coupled in the joining sleeve 20 of the joining element. The elastic bonding achieved with the elastomer element 30 of the joining element allows reducing vibrations and acoustically isolating the suspension component 100.

The method of the invention can have other steps which allow improving the required results in the coupling. Therefore, the method can comprise a step prior to the step of introducing the joining element into the hole 10 of the suspension component 100, this step being the step of adding an additive to the non-molded and non-cured raw material of the elastomer element 30. This additive favors the adhesion of said elastomer element 30 to the wall 11 of the hole 10 of the suspension component 100, and to the outer surface 22 of the wall 21 of the joining sleeve 20.

## Claims

1. Suspension component of an automotive vehicle, comprising at least one hole (10) and an interconnector (120) housed in said hole (10), the suspension component (100) comprising, in the hole (10), a joining element (30, 20) in which the interconnector (120) is coupled, the joining element (30, 20) comprising an elastomer element (30) and said joining element (30, 20) being integrated in the hole (10) by means of the chemical bonding of the elastomer element (30) with the suspension component (100) by means of a vulcanization process, **characterized in that** the elastomer element (30) of the joining element (30, 20) integrated in the hole (10) is a part that is molded and cured by means of said vulcanization process inside the hole (10) starting with a non-molded and non-cured raw material.

2. Suspension component according to claim 1, wherein the elastomer element (30) is vulcanized rubber, the non-molded raw material being raw rubber with additives that allow vulcanization thereof.

3. Suspension component according to claim 1 or 2, wherein the wall (11) of the hole (10) of the suspension component (100) comprises a curved inner area (12), said curved inner area (12) preferably running along the perimeter of the wall (11) of the hole (10).

4. Suspension component according to claim 3, wherein the curved inner area (12) of the wall (11) of the hole (10) of the suspension component (100) is concave.

5. Suspension component according to any of the preceding claims, wherein the joining element (30, 20) comprises a joining sleeve (20), the elastomer element (30) being arranged around said joining sleeve (20), and said elastomer element (30) being bonded with the joining sleeve (20) by means of a chemical bonding generated during the vulcanization process.

6. Suspension component according to claim 5, wherein the elastomer element (30) in the form of non-molded and non-cured raw material is a strip wound around the joining sleeve (20) before the joining element (30, 20) is introduced into the hole (10).

7. Suspension component according to claim 5 or 6, wherein the interconnector (120) comprises a sleeve (40) introduced into the joining sleeve (20) after the vulcanization process, the outer diameter of the sleeve (40) of the interconnector (120) being larger than the original inner diameter of the joining sleeve (20).

8. Suspension component according to claim 7, wherein the interconnector (120) is a bushing.

9. Suspension component according to claim 7, wherein the interconnector (120) is a ball joint interconnector, the sleeve (40) comprising a longitudinal conical hole and the interconnector (120) comprising a ball joint (60) which is coupled in said sleeve (40).

10. Suspension component according to claim 7, wherein the interconnector (120) is a ball interconnector, the interconnector (120) comprising a ball sleeve (70) which is coupled in the sleeve (40).

11. Suspension component according to any of claims 5 to 10, wherein the outer surface (22) of the wall (21) of the joining sleeve (20) comprises a curved outer area (25) which is convex.

12. Suspension component according to any of claims 5 to 11, wherein the surface of the wall (11) of the hole (10) of the suspension component (100) and/or the outer surface (22) of the wall (21) of the joining sleeve (20) is uneven to favor the adhesion of the elastomer element (30).

13. Suspension component according to claim 12, wherein the surface of the wall (11) of the hole (10) and/or the outer surface (22) of the wall (21) of the joining sleeve (20) comprise a plurality of grooves running along same so that the material of the elastomer element (30) penetrates said grooves during chemical bonding.

14. Method of integrating a joining element in a hole of a suspension component of an automotive vehicle in which an interconnector (120) is housed, wherein the joining element (30, 20) comprises an elastomer element (30) and said joining element (30, 20) is integrated in the hole (10) by means of the chemical bonding of the elastomer element (30) with the suspension component (100), the interconnector (120) being coupled in the joining element (30, 20), **characterized in that** it comprises the following steps:
- a first step of introducing the joining element (30, 20) into the hole (10) with the elastomer element (30) in the form of non-molded and non-cured raw material, and
- a second step of molding, curing, and integration in which the elastomer element (30) is molded, cured, and integrated in the hole (10) by vulcanization.

15. Method according to claim 14, wherein the elastomer element (30) is vulcanized rubber, the non-molded and non-cured raw material being raw rubber with additives that allow vulcanization thereof.

16. Method according to claim 14 or 15, wherein the joining element (30, 20) comprises a joining sleeve (20), the elastomer element (30) being arranged around said joining sleeve (20), a chemical bonding of the elastomer element (30) with the joining sleeve (20) occurring in the step of molding, curing, and integration.

17. Method according to claim 16, wherein the elastomer element (30) in the form of non-molded and non-cured raw material is a strip wound around the joining sleeve (20) before the joining element (30, 20) is introduced into the hole (10).

18. Method according to claim 16 or 17, wherein the interconnector (120) comprises a sleeve (40) with an outer diameter larger than the original inner diameter of the joining sleeve (20), the sleeve (40) of the interconnector (120) being introduced into the joining sleeve (20) in a step after the step of molding, curing, and integration, the joining sleeve (20) being radially expanded.

19. Method according to any of claims 14 to 18, wherein in the step of molding, curing, and integration, the joining element (30, 20) is arranged in the hole (10) held by means of a mold (150) pressing the elastomer element (30) into its interior for vulcanization, the mold (150) being removed once the molding and curing of the elastomer element (30) and the integration thereof in the hole (10) has occurred.

20. Method according to claim 19, wherein the mold (150) is heated before introducing the joining element (30, 20) into the hole (10) of the suspension component (100).

21. Method according to claim 19 or 20, wherein the mold (150) comprises two semi-molds which are coupled to the joining element (30, 20) at the two ends.
